# EUROPEAN PATENT SPECIFICATION

(11) **EP 3 044 429 B1**
(45) Date of publication and mention of the grant of the patent: **30.06.2021**
(21) Application number: 14861888.7
(22) Date of filing: 27.08.2014
(51) Int. Cl.: B29C 70/32, B29C 53/56

(54) **METHOD OF MANUFACTURING ICE PANEL SEGMENTS**
VERFAHREN ZUR HERSTELLUNG VON EISTAFELSEGMENTEN
PROCÉDÉ DE FABRICATION DE SEGMENTS DE PANNEAU DE GLACE

(30) Priority: 12.09.2013 US 201361877157 P
(43) Date of publication of application: 20.07.2016
(73) Proprietor: Raytheon Technologies Corporation, Farmington, CT 06032 (US)
(72) Inventor: CLARKSON, Steven, Cheshire, Connecticut 06410 (US); COSTA, Mark W., Storrs, Connecticut 06268 (US)
(74) Representative: Dehns
(86) International application number: PCT/US2014/052924
(87) International publication number: WO 2015/073097

(56) References cited:
- DK-B- 165 564
- DK-B- 165 564
- US-A- 3 393 436
- US-A- 3 393 436
- US-A- 5 447 411
- US-A- 5 447 411
- US-A1- 2013 164 492
- US-A1- 2013 164 492
- US-A1- 2013 195 605
- US-A1- 2013 195 605
- US-B2- 7 713 021
- US-B2- 7 713 021
- US-B2- 7 789 620
- US-B2- 7 789 620
- None

## Description

### Field

The present disclosure relates generally to turbine engines, and more particularly, the present disclosure relates to fan cases for turbofan engines.

### Background

A turbofan engine, such as those used in modern aircraft, typically includes a fan, a compressor, a combustion section, and a turbine. The fan may be located within a fan case and may comprise a plurality of fan blades coupled to a hub. At low temperatures and/or high altitudes, ice may accumulate on the fan blades. As the fan rotates at high angular velocities, the ice may release from the fan blades and contact an inner surface of the fan case at high speeds. The ice may cause damage to an unprotected fan case. In order to protect the fan case, ice panel segments may be bonded to an inner surface of the fan case. The ice panel segments may be individually manufactured and molded to match the geometry of the inner surface of the fan case.

A method of manufacturing an ice panel segment having the features of the preamble to claim 1 is disclosed in US 7,713,021.

### Summary

The present invention provides a method of manufacturing an ice panel segment in accordance with claim 1.

Features of embodiments are recited in the dependent claims.

### Brief Description of the Drawings

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a schematic axial cross-section view of a gas turbine engine according to various embodiments;
FIG. 2 illustrates a perspective view of a front portion of a gas turbine engine according to various embodiments;
FIG. 3 illustrates a perspective view of a fan case according to various embodiments;
FIGs. 4A-4C illustrate a series of steps in manufacturing ice panel segments according to various embodiments; and
FIG. 5 illustrates a flow chart of a process for manufacturing ice panel segments according to various embodiments.

### Detailed Description

The detailed description of exemplary embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact.

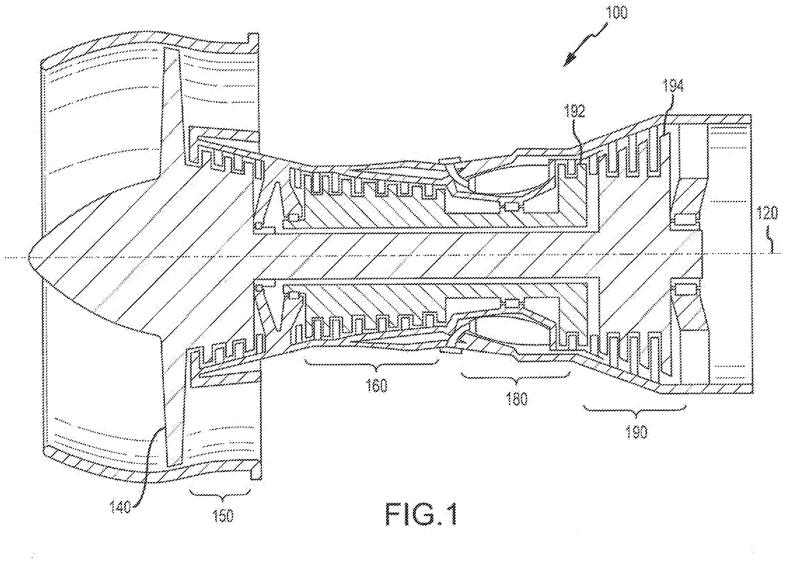

Referring to FIG. 1, a gas turbine engine 100, such as a turbofan engine, is illustrated according to various embodiments. Gas turbine engine 100 is disposed about axial centerline axis 120, which may also be referred to as axis of rotation 120. Gas turbine engine 100 may comprise a fan 140, compressor sections 150 and 160, a combustion section 180, and a turbine section 190. Air compressed in the compressor sections 150, 160 may be mixed with fuel and burned in combustion section 180 and expanded across turbine section 190. Turbine section 190 may include high pressure rotors 192 and low pressure rotors 194, which rotate in response to the expansion. Low pressure rotors 194 may be coupled to fan 140 via a shaft, causing fan 140 to rotate. FIG. 1 provides a general understanding of the sections in a gas turbine engine, and is not intended to limit the disclosure.

The forward-aft positions of engine 100 lie along axis of rotation 120. For example, fan 140 may be referred to as forward of turbine section 190 and turbine section 190 may be referred to as aft of fan 140. Typically, during operation of gas turbine engine 100, air flows from forward to aft, for example, from fan 140 to turbine section 190. As air flows from fan 140 to the more aft components of gas turbine engine 100, axis of rotation 120 may also generally define the direction of the air stream flow.

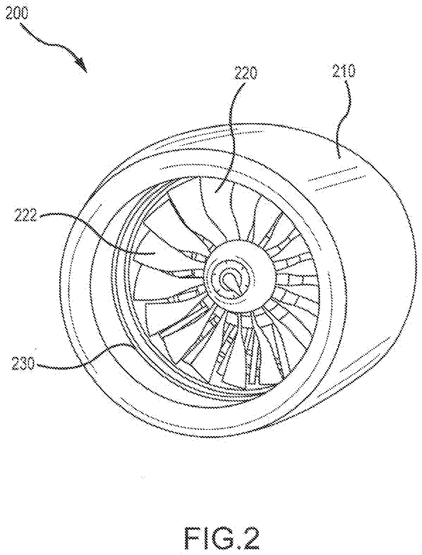

Referring to FIG. 2, a perspective view of a front portion of a gas turbine engine 200 is illustrated according to various embodiments. Gas turbine engine 200 may comprise nacelle 210, fan 220, and fan case 230. Fan 220 may comprise fan blades 222. Fan case 230 may be coupled to a radially inner portion of nacelle 210.

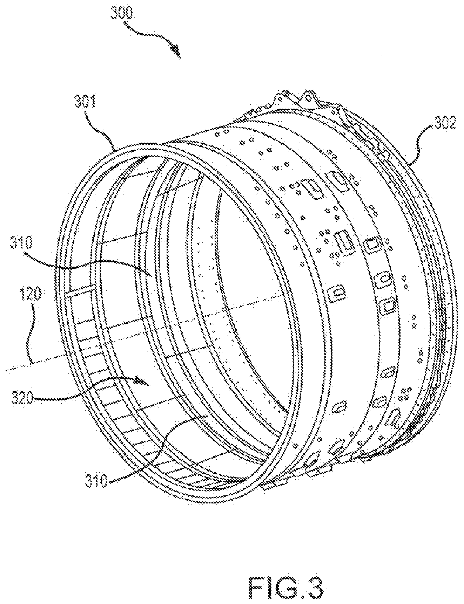

Referring to FIG. 3, a perspective view of a fan case 300 is illustrated according to various embodiments. In various embodiments, fan case 300 may be substantially cylindrical. Axial centerline axis 120 may generally define the direction of airflow through fan case 300 from forward end 301 to aft end 302. A plurality of ice panel segments 310 may be coupled to an inner surface 320 of fan case 300. Each ice panel segment 310 may comprise a portion of a cylinder. For example, as illustrated in FIG. 3, each ice panel segment 310 comprises a sixty degree arc forming a portion of a cylinder. The plurality of ice panel segments 310 may form a complete cylinder located within fan case 300. Each ice panel segment 310 may be individually installed in fan case 300. In various embodiments, ice panel segments 310 may be bonded to inner surface 320 of fan case 300.

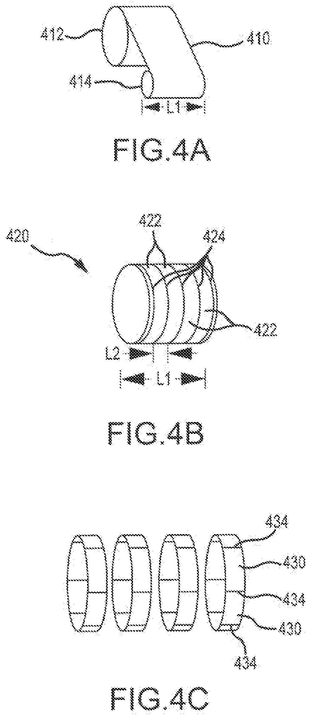

Referring to FIGs. 4A to 4C, a series of steps for manufacturing ice panel segments 430 is illustrated according to various embodiments. Referring to FIG. 4A, ice panel material 410 may be wound onto a mandrel 412. In various embodiments, mandrel 412 may be a tool with an outer profile which comprises substantially the same size and shape as an inner surface of a fan case in the region of a fan. For example, in various embodiments, a fan case may be substantially cylindrical and comprise a 90 inch (2.3 m) inside diameter, and similarly mandrel 412 may be substantially cylindrical and comprise a 90 inch (2.3 m) outside diameter, such that material wrapped onto mandrel 412 may comprise substantially the same size and shape as the inner surface of the fan case. In various embodiments, an outside diameter of mandrel 412 may be slightly smaller than the inside diameter of the fan case in order to account for a thickness of ice panel segments 430. For example, in various embodiments, ice panel segments 430 may comprise a thickness of about .16 inches (.406 cm), or about .08 inches (.203 cm)-.32(.812 cm) inches. Thus, in various embodiments, an outside diameter of mandrel 412 may be about .16 (.406 cm) inches, or about .08 inches (.203 cm)-.32 inches (.812 cm) less than an inside diameter of the fan case. In various embodiments, mandrel 412 may be designed to match any size and shape corresponding to an inner surface of a fan case.

Ice panel material 410 comprises a material capable of protecting a fan case from an impact of ice shed from fan blades. Ice panel material 410 comprises a pre-preg, which comprises a fibrous material and an epoxy. Ice panel material 410 comprises a para-aramid synthetic fiber, such as KEVLAR®.

Ice panel segments 430 comprise a plurality of layers of ice panel material 410. For example, in various embodiments, ice panel segments 430 may comprise twenty layers of ice panel material 410. However, in various embodiments, ice panel segments 430 may comprise any number of layers of ice panel material 410, for example, from three layers to fifty layers. In various embodiments, different layers of ice panel segments 430 are comprised of different materials. Ice panel segments 430 may comprise a plurality of KEVLAR®/epoxy layers, with an inner fiberglass layer located radially inward from the KEVLAR®/epoxy layers, and an outer fiberglass layer located radially outward from the KEVLAR®/epoxy layers. KEVLAR® is a registered trademark of DuPont™ Company. Fiberglass may comprise advantageous bonding properties over KEVLAR®. Thus, by providing an outer fiberglass layer, ice panel segments 430 may be more effectively bonded to the inner surface of the fan case. However, fiberglass comprises biased fibers which may cause warping of ice panel segments 430. By providing a second fiberglass layer, such as the inner fiberglass layer, with fibers biased in an orthogonal direction to the fibers in the outer fiberglass layer, any warping caused by the outer fiberglass layer may be counteracted by the inner fiberglass layer. Additionally, the inner fiberglass layer may seal and protect the KEVLAR®/epoxy layers.

Mandrel 412 is spun in order to wrap ice panel material 410 around mandrel 412. In various embodiments, a motor may spin mandrel 412. However, in various embodiments, mandrel 412 may be spun by manual power. Additionally, in various embodiments, mandrel 412 may remain stationary, and ice panel material 410 may be wrapped around a stationary mandrel 412.

In various embodiments, a tension may be applied to ice panel material 410 as it is wrapped onto mandrel 412. The tension may eliminate or decrease the necessity to perform intermediate vacuum debulking of ice panel segments 430. Intermediate vacuum debulking may refer to debulking which occurs several times throughout layup of ice panel materials. As subsequent layers of ice panel material 410 wrapped around mandrel 412 may compress relatively radially inner layers previously wrapped around mandrel 412, such intermediate vacuum debulking may not be required. In various embodiments, the applied tension may equate to about 14psi (97 kPa), or about 12-16psi (83-110 kPa) of pressure on ice panel material 410, which may be equivalent to the pressure typically applied during intermediate vacuum debulking. However, in various embodiments, the tension applied may be greater than or less than 14psi (97 kPa) in order to achieve a desired fiber-to-resin ratio in ice panel material 410.

In various embodiments, once all layers of ice panel material 410 have been wrapped around mandrel 412, ice panel material 410 may be vacuum bagged and cured. Vacuum bagging may remove trapped air and volatiles and assist in resin flow and densification of ice panel material 410. Curing may include placing the ice panel material 410 in an autoclave and heating ice panel material 410 and applying pressure until ice panel material 410 becomes a rigid molded cylinder 420 as shown in FIG. 4B.

Rigid molded cylinder 420 is cut into ice panel cylinders 422 as shown by radial cuts 424. In various embodiments, an axial length L1 of rigid molded cylinder 420 may be greater than a desired axial length L2 of ice panel cylinders 422. For example, in various embodiments, ice panel material 410 may be provided in rolls 414 having axial length L1 equal to a first distance, for example, from about 12 inches (30 cm) to about 60 inches (152.4 cm) and, in various embodiments, 38 inches (96 cm). However, the desired axial length L2 of ice panel cylinders 422 may be to a second distance, for example, from about 6 inches (15 cm) to about 12 inches (30 cm) and, in various embodiments 9 inches (23 cm). Rigid molded cylinder 420 may therefore be cut into four ice panel cylinders 422. Thus, multiple ice panel cylinders 422 are formed in a single cycle of winding and curing. However, in various embodiments, axial length L1 is equal to L2, such that only one ice panel cylinder 422 is formed by rigid molded cylinder 420, and rigid molded cylinder 420 is not required to be further cut to form ice panel cylinders 422.

In various embodiments, ice panel cylinders 422 may be cut into a plurality of ice panel segments 430 as shown by axial cuts 434, as illustrated in FIG. 4C. In FIG. 4C, each ice panel cylinder 422 is cut into six equal sixty degree ice panel segments 430. However, in various embodiments, ice panel cylinder 422 may be cut into any number of ice panel segments 430. As the number of ice panel segments 430 per ice panel cylinder 422 increases, the amount of labor required to install the ice panel segments 430 in a fan case may also increase. However, for large fan cases, a larger number of ice panel segments 430 may be required to ease handling of large components. Thus, in various embodiments, the number of ice panel segments 430 per ice panel cylinder 422 may be selected by balancing labor and handling requirements. After ice panel cylinders 422 have been cut into ice panel segments 430, ice panel segments 430 may be bonded to the inner surface of a fan case.

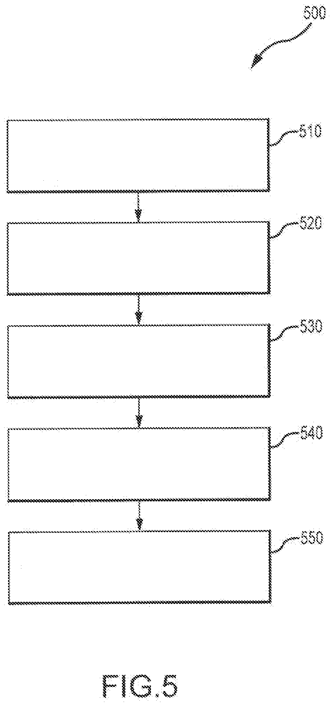

Referring to FIG. 5, a flowchart illustrating a process 500 for manufacturing ice panel segments is illustrated according to various embodiments. A mandrel and an ice panel material are provided. In various embodiments, a shape of an outer surface of the mandrel may correspond to a shape of an inner surface of a fan case. The ice panel material comprises a roll of a fiberglass composite and a roll of a KEVLAR®/epoxy composite. The ice panel material is formed into a cylinder by wrapping the ice panel material around the mandrel (step 510). Wrapping the ice panel material around the mandrel comprises wrapping an inner fiberglass layer around the mandrel, wrapping a plurality of KEVLAR®/epoxy layers around the inner fiberglass layer, and wrapping an outer fiberglass layer around the plurality of KEVLAR®/epoxy layers. In various embodiments, a tension may be applied to the various layers wrapped around the mandrel.

In various embodiments, the ice panel material may be bagged and cured (step 520). Curing the ice panel material solidifies the ice panel material, creating a rigid molded cylinder. In various embodiments, the rigid molded cylinder may be sliced into a plurality of ice panel cylinders by one or more radial cuts (step 530). Each ice panel cylinder may be configured to fit within a fan case. Each ice panel cylinder may be further cut into ice panel segments by one or more axial cuts (step 540). However, in various embodiments, the rigid molded cylinder may be cut axially prior to being radially cut into ice panel cylinders. Once cut into ice panel segments, the ice panel segments may be bonded to an inner surface of a fan case (step 550).

## Claims

1. A method of manufacturing an ice panel segment (310; 430) comprising:
wrapping an ice panel material (410) around a mandrel (412);
curing the ice panel material (410); and
cutting the ice panel material (410) into ice panel cylinders (422); **characterised in that**
the wrapping the ice panel material (410) around the mandrel (412) comprises wrapping an inner fiberglass layer around the mandrel (412);
the wrapping the ice panel material (410) around the mandrel (412) further comprises wrapping a para-aramid synthetic fiber and epoxy pre-preg layer around the inner fiberglass layer;
the wrapping the ice panel material (410) around the mandrel (412) further comprises wrapping an outer fiberglass layer around the para-aramid synthetic fiber and epoxy pre-preg layer; and
the fibers in the inner fiberglass layer are wrapped in an orthogonal direction to the fibers in the outer fiberglass layer.

2. The method of claim 1, further comprising cutting the ice panel cylinders (422) into ice panel segments (310; 430).

3. The method of claim 2, wherein the ice panel material (410) is cut radially into the ice panel cylinders (422), and wherein the ice panel cylinders (422) are cut axially into the ice panel segments (310; 430).

4. The method of claim 1, 2 or 3, wherein the wrapping the ice panel material (410) around the mandrel (412) comprises spinning the mandrel (412).

5. The method of any preceding claim, wherein an outer surface of the mandrel (412) corresponds to an inner surface of a fan case (230; 300).

6. The method of any preceding claim, further comprising bonding the ice panel segments (310; 430) to an inner surface of a fan case (230; 300).

7. The method of any preceding claim, wherein the wrapping the ice panel material (410) around the mandrel (412) comprises applying a tension to the ice panel material (410).

8. The method of any preceding claim, wherein the mandrel (412) is substantially cylindrical.

## Patentansprüche

1. Verfahren zum Herstellen eines Eistafelsegments (310; 430), umfassend:
Wickeln eines Eistafelmaterials (410) um einen Dorn (412);
Härten des Eistafelmaterials (410); und
Schneiden des Eistafelmaterials (410) in Eistafelzylinder (422); **dadurch gekennzeichnet, dass**
das Wickeln des Eistafelmaterials (410) um den Dorn (412) ein Wickeln einer inneren Glasfaserschicht um den Dorn (412) umfasst;
das Wickeln des Eistafelmaterials (410) um den Dorn (412) ferner ein Wickeln einer synthetischen Para-Aramid-Faser und einer Epoxid-PrePreg-Schicht um die innere Glasfaserschicht umfasst;
das Wickeln des Eistafelmaterials (410) um den Dorn (412) ferner ein Wickeln einer äußeren Glasfaserschicht um die synthetische Para-Aramid-Faser und die Epoxid-PrePreg-Schicht umfasst; und
die Fasern in der inneren Glasfaserschicht in einer orthogonalen Richtung zu den Fasern in der äußeren Glasfaserschicht gewickelt sind.

2. Verfahren nach Anspruch 1, ferner umfassend ein Schneiden der Eistafelzylinder (422) in Eistafelsegmente (310; 430).

3. Verfahren nach Anspruch 2, wobei das Eistafelmaterial (410) radial in die Eistafelzylinder (422) geschnitten wird, und wobei die Eistafelzylinder (422) axial in die Eistafelsegmente (310; 430) geschnitten sind.

4. Verfahren nach Anspruch 1, 2 oder 3, wobei das Wickeln des Eistafelmaterials (410) um den Dorn (412) ein Drehen des Dorns (412) umfasst.

5. Verfahren nach einem der vorstehenden Ansprüche, wobei eine äußere Fläche des Dorns (412) einer inneren Fläche eines Fan-Gehäuses (230; 300) entspricht.

6. Verfahren nach einem der vorstehenden Ansprüche, ferner umfassend ein Verbinden der Eistafelsegmente (310; 430) an eine innere Fläche eines Fan-Gehäuses (230; 300).

7. Verfahren nach einem der vorstehenden Ansprüche, wobei das Wickeln des Eistafelmaterials (410) um den Dorn (412) ein Anwenden einer Zugspannung auf das Eistafelmaterial (410) umfasst.

8. Verfahren nach einem der vorstehenden Ansprüche, wobei der Dorn (412) im Wesentlichen zylindrisch ist.

## Revendications

1. Procédé de fabrication d'un segment de panneau de glace (310 ; 430) comprenant :
l'enveloppement d'un matériau de panneau de glace (410) autour d'un mandrin (412) ;
le durcissement du matériau de panneau de glace (410) ; et
la découpe du matériau de panneau de glace (410) en cylindres de panneau de glace (422) ; **caractérisé en ce que**
l'enveloppement du matériau de panneau de glace (410) autour du mandrin (412) comprend l'enveloppement d'une couche interne en fibre de verre autour du mandrin (412) ;
l'enveloppement du matériau de panneau de glace (410) autour du mandrin (412) comprend en outre l'enveloppement d'une couche de pré-imprégnation en fibre synthétique para-aramide et époxy autour de la couche interne en fibre de verre ;
l'enveloppement du matériau de panneau de glace (410) autour du mandrin (412) comprend en outre l'enveloppement d'une couche externe en fibre de verre autour de la couche de pré-imprégnation en fibre synthétique para-aramide et époxy ; et
les fibres dans la couche interne en fibre de verre sont enveloppées dans une direction orthogonale aux fibres dans la couche externe en fibre de verre.

2. Procédé selon la revendication 1, comprenant en outre la découpe des cylindres de panneau de glace (422) en segments de panneau de glace (310 ; 430).

3. Procédé selon la revendication 2, dans lequel le matériau de panneau de glace (410) est découpé radialement dans les cylindres de panneau de glace (422), et dans lequel les cylindres de panneau de glace (422) sont découpés axialement dans les segments de panneau de glace (310 ; 430).

4. Procédé selon la revendication 1, 2 ou 3, dans lequel l'enveloppement du matériau de panneau de glace (410) autour du mandrin (412) comprend le filage du mandrin (412).

5. Procédé selon une quelconque revendication précédente, dans lequel une surface externe du mandrin (412) correspond à une surface interne d'un carter de soufflante (230 ; 300).

6. Procédé selon une quelconque revendication précédente, comprenant en outre la liaison des segments de panneau de glace (310 ; 430) à une surface interne d'un carter de soufflante (230 ; 300).

7. Procédé selon une quelconque revendication précédente, dans lequel l'enveloppement du matériau de panneau de glace (410) autour du mandrin (412) comprend l'application d'une tension au matériau de panneau de glace (410).

8. Procédé selon une quelconque revendication précédente, dans lequel le mandrin (412) est sensiblement cylindrique.
